# EUROPÄISCHE PATENTSCHRIFT

(11) **EP 0 685 748 B1**
(45) Veröffentlichungstag und Bekanntmachung des Hinweises auf die Patenterteilung: **22.07.1998**
(21) Anmeldenummer: 95105444.4
(22) Anmeldetag: 11.04.1995
(51) Int. Cl.: G01S 17/02, G01S 17/46

(54) **Lichttaster mit Hintergrundausblendung, realisiert nach dem Quotientenverfahren**
Light sensor with background suppression realised using the quotient process
Senseur lumineux à suppression du bruit de fond, realisé au moyen du processus de quotient

(30) Priorität: 31.05.1994 DE 4419032
(43) Veröffentlichungstag der Anmeldung: 06.12.1995
(73) Patentinhaber: SICK AG, 79183 Waldkirch (DE)
(72) Erfinder: Meyer, Hubert, D-79183 Waldkirch (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 198 253
- WO-A-88/05900
- DE-A- 3 407 210
- DE-U- 9 105 710

## Beschreibung

Die Erfindung betrifft einen Lichttaster gemäß dem Anspruch 1, insbesondere einen photoelektrischen Lichttaster, welcher in einem Gehäuse einen Lichtsender aufweist, der einen gebündelten Sendestrahl aussendet und eine photoelektrische Wandleranordnung beinhaltet, die einen Anteil des an einem Objekt reflektierten Sendestrahles empfängt.

Derartige Lichttaster dienen dazu, sich in einem vorbestimmten Abstandsbereich befindliche z. B. vorbeigeführte lichtreflektierende Objekte zu erkennen.

Um die Grenzen eines vorbestimmbaren Abstandsbereiches bei den berührungslos arbeitenden Tastern, unabhängig von den Reflexionseigenschaften des Objektes, am selben Ort zu halten, muß neben der eigentlichen Empfangssignalamplitude noch eine Abstandsinformation des Objektes zum Lichttaster ermittelt werden.

Es sind heute Lichttaster mit Hintergrundausblendung bekannt, bei denen die Abstandsinformation dadurch gewonnen wird, daß der Objektabstand im wesentlichen einen von zwei möglichen Zuständen zugeordnet wird, d. h. das Objekt befindet sich zwischen dem Lichttaster und dem Grenzabstand oder außerhalb des Grenzabstandes.

Derartige Lichttaster, arbeiten nach dem bekannten Triangulationsprinzip.(DE-PS 35 13 671). Bei diesem Tastertyp ist das Empfangsobjektiv neben dem Sendeobjektiv angeordnet, so daß sich immer ein endlicher Winkel zwischen dem Sendestrahl und dem am Objekt reflektierten wirksamen Empfangsstrahl einstellt. Je nach Abstand des Objektes zum Lichttaster verändert sich dieser Winkel. Eine im Taster angeordnete photoelektrische Wandleranordnung, bestehend aus zwei oder mehr photoelektrischen Empfängern, ist dabei in der Lage zu unterscheiden, ob der Ursprung der Lichtreflexion am Objekt, außerhalb oder innerhalb eines vorbestimmten Bereiches liegt. Befindet sich der Reflexionspunkt innerhalb des vorbestimmten Abstandes, so wird das reflektierte Licht schwerpunktmäßig auf das "Nah-Element" abgebildet; befindet sich das Objekt außerhalb des vorbestimmten Abstandes, so wird die reflektierte Strahlung schwerpunktmäßig auf das danebenliegende "Fern-Element" abgebildet; befindet sich das Objekt am Grenzpunkt des vorbestimmten Abstandes, so wird die reflektierte Lichtmenge nahezu gleichmäßig auf die Trennlinie der beiden Elemente abgebildet. Abhängig von der jeweiligen Bestrahlungsstärke auf den beiden Elementen werden entsprechende Photoströme erzeugt.

Die beiden photoelektrischen Signale werden, wie ebenfalls bekannt, einem Differenzverstärker zugeführt DE-U-9 105 710. Der Differenzverstärker ist an eine Auswerteschaltung angeschlossen, die nur bei einem Signal mit demjenigen Vorzeichen, das auftritt, wenn ein Gegenstand in einem kleineren Abstand als dem Grenzabstand anwesend ist, ein Anwesenheitssignal abgibt.

Um nicht schon bei geringen Anwesenheitssignalen oder z. B. von durch Störungen bedingten Signalschwankungen ein Ausgangssignal zu erhalten, ist weiterhin bekannt, daß die Auswerteschaltung eine Schaltschwelle enthält, derart, daß ein Anwesenheitssignal erst dann abgegeben wird, wenn das, das richtige Vorzeichen aufweisende Signal, am Ausgang des Differenzverstärkers deutlich von 0 verschieden ist.

Bei dem bekannten und zuvor beschriebenen Verfahren spielt natürlich die absolute Signalamplitude des Empfangssignales eine wichtige Rolle. Dadurch ist es auch erklärlich, warum bei diesen bekannten Systemen (Differenzverstärker, Auswerteelektronik, endliche Ansprechschwelle) eine Abhängigkeit in der Nah-/Fernbereichszuordnung von der Signalamplitude, d. h. vom Reflexionsgrad des Objektes, vorhanden ist.

Die Folge davon ist, daß der Lichttaster, speziell im Grenzabstand, nicht eindeutig und unabhängig vom Tastobjekt das Objekt dem Nah- oder Fernbreich zuordnet, sondern eine gewisse nicht eindeutige "Grauzone" vorliegt.

Die DE-A-34 07 210 betrifft einen photoelektrischen Schalter, bei dem gemäß einer Ausführungsform zwei Lichtempfänger im gleichen Abstand von einem gemeinsamen Lichtemitter angeordnet sind. Durch die symmetrische Anordnung der beiden Lichtempfänger kann das bei der Verwendung nur eines einzigen Lichtempfängers auftretende Problem vermieden werden, welches darin besteht, daß die Entfernung eines Gegenstandes fehlerhaft gemessen wird, wenn der Gegenstand nur teilweise in die Detektionsfläche eintritt und der reflektierte Lichtfleck auf dem Lichtempfänger zum einen klein und zum anderen im wesentlichen an der Stelle abgebildet wird, in welcher ein Gegenstand detektiert werden würde, der sich in einer kürzeren als der tatsächlichen Entfernung zum Lichtempfänger befindet. Bei der Ausführungsform mit den beiden symmetrisch angeordneten Lichtempfängern wird in einem solchen Fall der reflektierte Lichtfleck auf dem anderen Lichtempfänger an einer Stelle abgebildet, die einem in einer größeren als der tatsächlichen Entfernung befindlichen Gegenstand entspricht. Durch eine entsprechend ausgebildete Rechenschaltung wird dafür gesorgt, daß sich die bei den beiden Lichtempfängern mit entgegengesetzter Wirkung auftretenden Fehler gegenseitig aufheben.

### Aufgabe der Erfindung

Der Erfindung liegt nun die Aufgabe zugrunde, die Abhängigkeit im Grenzabstand vom Reflexionsgrad des Objektes zu beseitigen, bzw. weitestgehend zu reduzieren. Wird beispielsweise ein derartiger Lichttaster zur Füllstandssteuerung eingesetzt, soll der vorbestimmte Grenzabstand, d. h. die Füllmarke bei allen Materialien, genau am gleichen Ort liegen und nicht abhängig vom Remissionsgrad des aufzufüllenden Materials sein. Der Taster scll also z. B. dunklen Kaffee genauso wie z. B. weißen Zucker am gleichen Grenzpunkt melden.

### Lösung der Erfindung.

Zur Lösung dieser Aufgabe sind erfindungsgemäß die Merkmale von Anspruch 1 vorgesehen. Somit sieht die Erfindung vor, daß die beiden photoelektrischen Signale des Nah-/Elementes und des Fern-Elementes nicht nach dem Differenzverfahren, sondern nach einem Quotientenverfahren weiterverarbeitet werden, d. h. es findet eine Division von Nahelementsignal (N) durch Fernelementsignal (F) statt. Auswertung = (N/F).

### Vorteile der Erfindung.

Folgende Vorteile sind bei dieser erfindungsgemäßen Auswertung zu erzielen:
* Der Signalverlauf (Quotientwert in Abhängigkeit des Tastabstandes) ist unabhängig vom Reflexionsgrad des Tastmateriales.
* Die große Steilheit der Signalkurve, speziell im Bereich des Grenzabstandes, liefert ein gutes Schalzverhalten.
* Das Verfahren ist relativ unkritisch gegenüber Driften (Temperatur, Offset) und Bauteilstreuungen.
* Der Signal-Rauschabstand ist an der Auswerteschwelle um ca. Faktor 3 besser, als nach dem zum Stand der Technik zählenden Differenzverfahren.

In Summe bedeutet dies, daß nach dem Quotientenverfahren der Erfindung die Schaltpunktverschiebung zwischen schwarzem und weißem Reflexionsmaterial rund Faktor 2 kleiner ist, als nach dem bisher bekannten Differenzverfahren.

### Beschreibung von Ausführungsbeispielen der Erfindung.

Die Erfindung wird im folgenden beispielsweise anhand der Zeichnungen beschrieben.
1. Die Fig. 1a, 1b und 1c zeigen schematische Seitenansichten eines erfindungsgemäßen Lichttasters mit dem dazugehörigen Strahlengang bei Anordnung eines lichtreflektierenden Gegenstandes in drei verschiedenen Tastweiten A, B bzw. C.
2. Fig. 2 zeigt ein Blockschaltbild der photoelektrischen Wandleranordnung mit Signalverarbeitung nach dem Quotientenverfahren.
3. Fig. 3a zeigt den Verlauf sowie den dazugehörigen Schaltausgang über dem Tastabstandsbereich bei Auswertung nach dem bekannten Differenzverfahren.
4. Fig. 3b zeigt den Verlauf sowie den dazugehörigen Schaltausgang über dem Tastabstandsbereich bei Auswertung nach dem erfindungsgemäßen Quotientenverfahren.

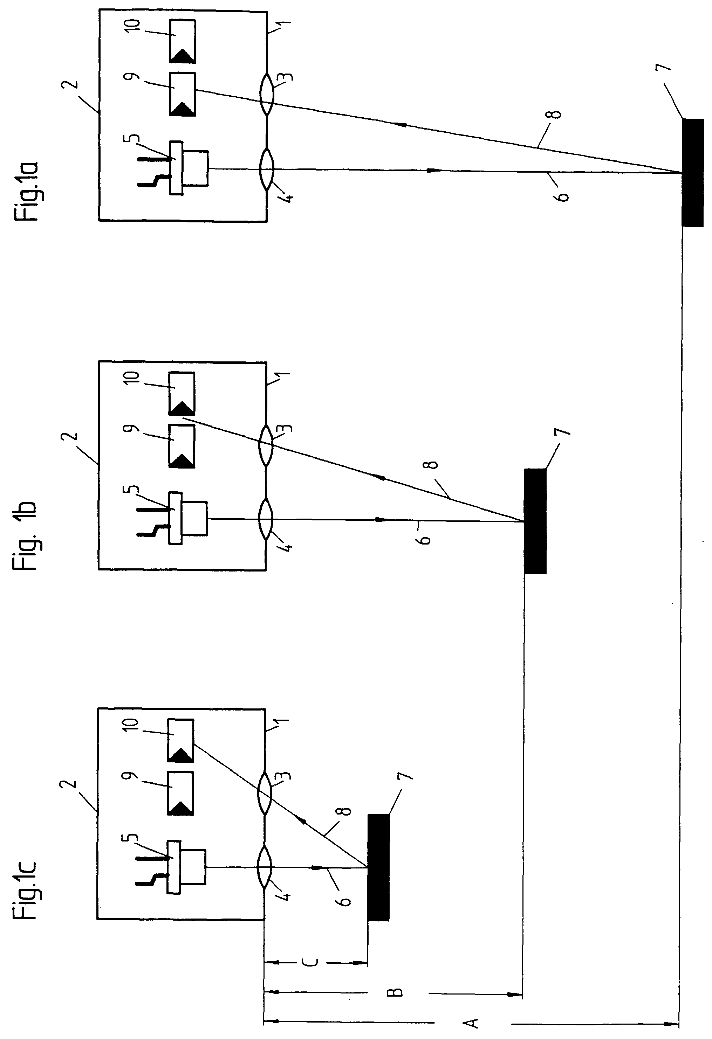

Nach Fig. 1a bis 1c sind in der Vorderwand 1 eines quaderförmigen flachen Gehäuses (2) nebeneinander in geringem Abstand die Empfangsfrontlinse (3) und die Sendefrontlinse (4) angeordnet. Nahe dem Brennpunkt der Sendefrontlinse (4) befindet sich eine Lumineszenzdiode (5) als Lichtquelle, so daß aus der Sendefrontlinse (4) senkrecht zur Frontwand (1) ein gebündelter Sendelichtstrahl (6) ausgesendet wird. Nach Fig. 1b ist in einer als Grenztastweite bezeichneten Tastweite (B) vor der Frontwand (1) ein lichtreflektierender Gegenstand (7) angeordnet, der das austretende Licht des Sendestrahles (6) diffus zurückreflektiert. Ein enger Ausschnitt aus diesem diffusen Streukegel, welcher sich um den Zentralstrahl (8) bildet, wird von der Empfangsfrontlinse (3) aufgenommen und in die Ebene der beiden dahinterliegenden Photowandler (9, 10) fokussiert.

Bei der in Fig. 1b angenommenen Grenztastweite (B) fällt der fokussierte Empfangsstrahl (8) genau auf die Trennlinie der beiden Photowandler (9, 10). Beide Photowandler werden dadurch teilweise bestrahlt. Befindet sich der Gegenstand (7) jedoch nach Fig. 1a in einer größeren Tastweite (A), so fällt der Empfangsstrahl (8) ausschließlich auf den Photowandler (9); befindet sich das Objekt (7) dagegen nach Fig. 1c in einer geringeren Tastweite (C), so wird das Lichtbündel um den Strahl (8) auf den Photowandler (10) fokussiert.

Beide Photowandler (9, 10) sind an eine Auswerteschaltung angeschlossen, welche die erfindungsgemäße Quotientenbildung beinhaltet.

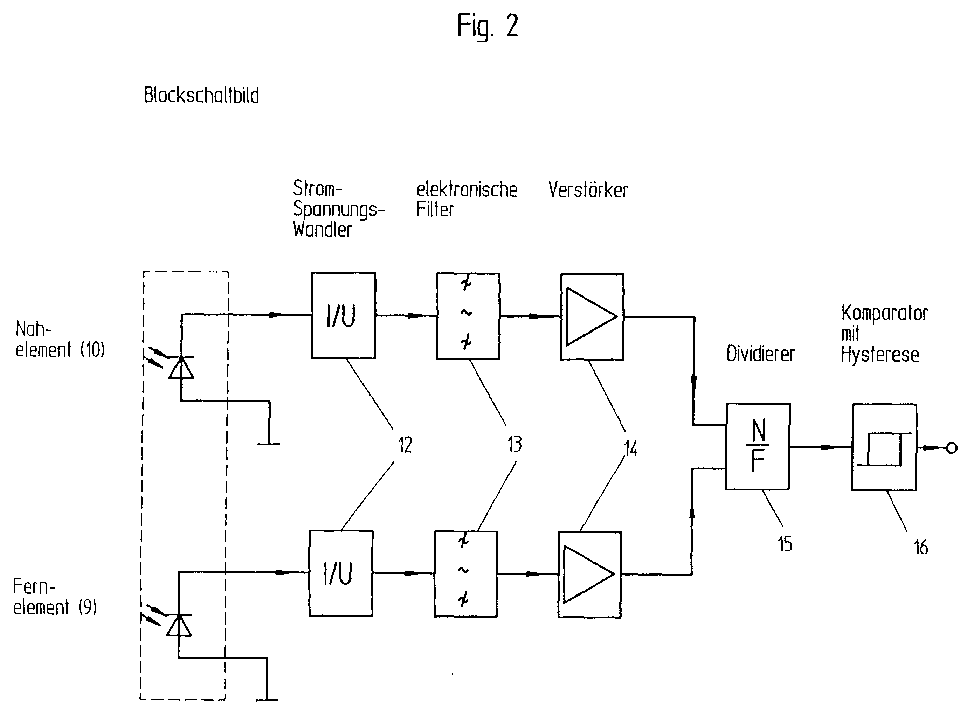

In Fig. 2) ist ein Blockschaltbild der Auswerteschaltung dargestellt. Danach sind die beiden Photowandler (9, 10) jeweils an einen Strom-/Spannungswandler (12), einem elektronischen Filter (13) sowie einem Verstärker (14) angeschlossen. Die Ausgangssignale der beiden Verstärker (14) werden dem Dividierer (15) zugeführt. Der Ausgang des Dividierers ist mit dem Komparator (16) verbunden, welcher den Schaltausgang (17) liefert.

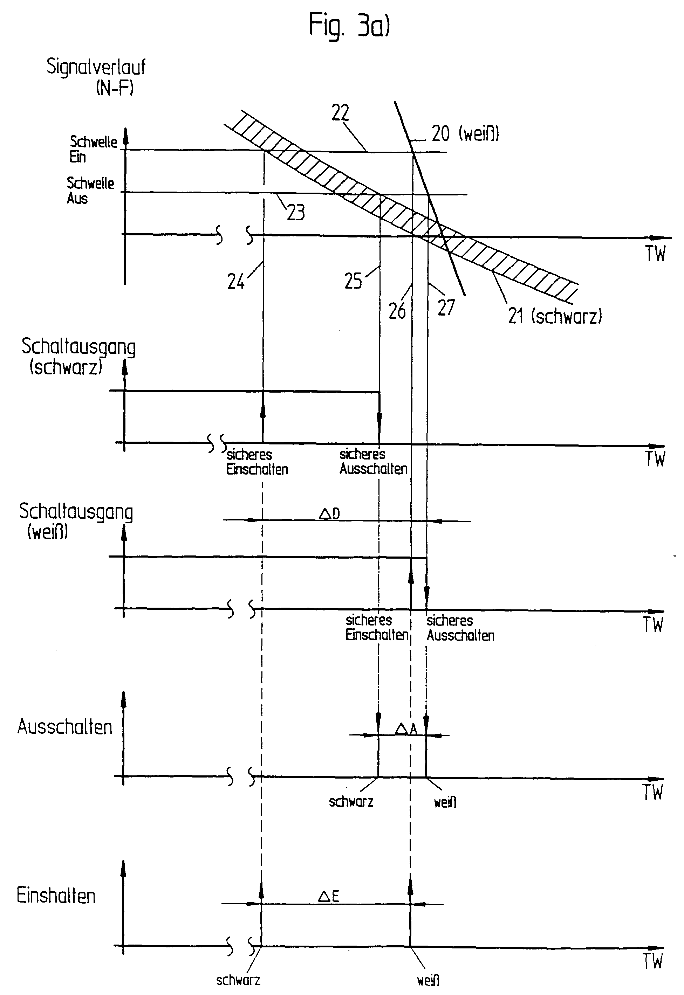

In Fig. 3a) ist zunächst das nach dem Stand der Technik bekannte Differenzsignal über der Tastweite im Bereich von (B) dargestellt. Dabei bedeutet (20) den Signalverlauf bei einem weißen Objekt und (21) bei einem schwarzen Objekt. Aufgrund des hohen Remissionsgrades bei weißen Objekten ist dieses Signal praktisch nicht verrauscht, was durch eine scharfe Linie (20) in Fig. 3a) zum Ausdruck kommt. Dem Signal von Objekten mit geringem Remissionsgrad (z. B. schwarzem Tuch) ist dagegen ein deutlichen Rauschen überlagert, was durch ein schraffiertes Band (21) ausgedrückt wird. Die beiden Signale werden nun geschnitten durch die "Schwelle ein" (22) und die "Schwelle aus" (23). Bewegt sich nun ein schwarzes Objekt von der Tastweite (A) kommend auf den Lichttaster zu, so wird ein sicheres Überschreiten der Schwelle (22) am Ort (24) erreicht.

Handelt es sich dagegen um ein weißes Tastmaterial, wird die Schwelle (22) bereits am Ort (25) überschritten. Ähnlich verhält es sich, wenn das Tastmaterial aus dem Tastabstand (C) kommend vom Lichttaster weg bewegt wird. Mit schwarzem Material wird die Schwelle (23) am Ort (26) unterschritten, mit weißem Material dagegen am Ort (27). Störend an diesem Verfahren nach dem bekannten Stand der Technik ist der große Differenzbetrag des materialabhängigen Ausschaltortes (Δ A) bzw. Einschaltortes (Δ B).

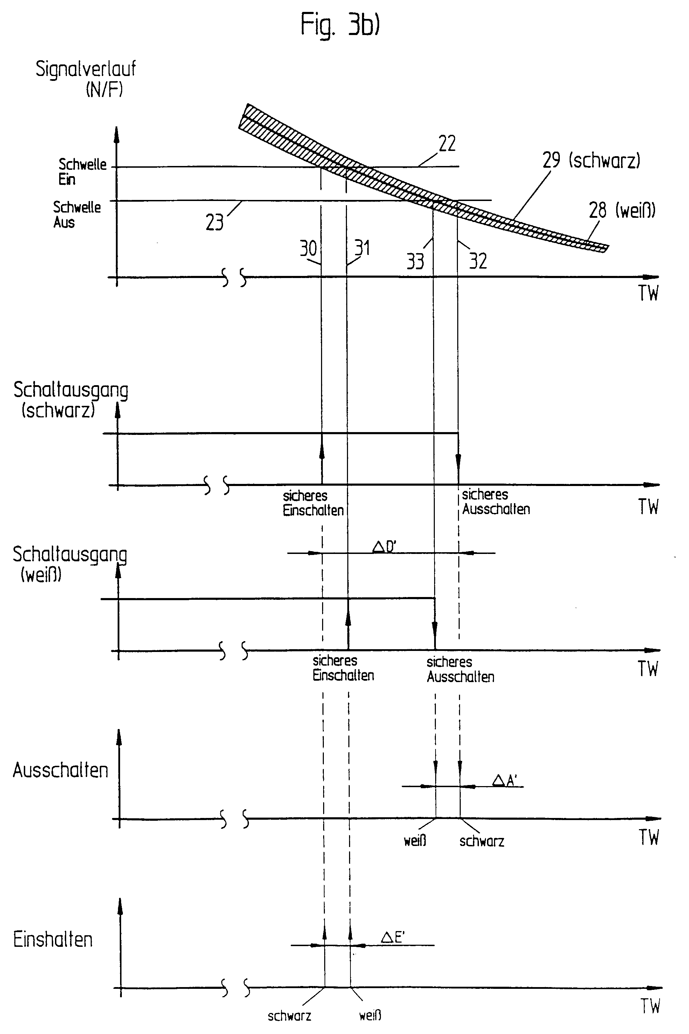

Die Vorteile nach dem erfindungsgemäßen Quotientenverfahren sind in der Fig. 3b) dargestellt.

Dabei bedeutet (28) der Signalverlauf bei einem weißen Objekt und (29) bei einem schwarzen Objekt. Auch hier ist aufgrund des hohen Remissionsgrades bei weißen Objekten das Signal praktisch nicht verrauscht, was durch eine scharfe Linie (28) gezeigt ist. Dem Signal von schwarzen Objekten ist dagegen auch hier ein deutliches Rauschen überlagert, was durch ein schraffiertes Band (29) ausgedrückt wird. Entscheidend ist jedoch die Tatsache, daß der Signalverlauf (der Quotientwert in Abhängigkeit des Tastabstandes) unabhängig vom Reflexionsgrad des Tastmateriales den gleichen Verlauf hat.

Werden nun diese beiden Signale geschnitten durch die "Schwelle ein" (22) und die "Schwelle aus" (23), wird der Schaltvorgang ausgelöst. Bewegt sich nun ein schwarzes Objekt von der Tastweite (A) kommend auf den Lichttaster zu, so wird ein sicheres Überschreiten der Schwelle (22) am Ort (30) erreicht. Handelt es sich dagegen um ein weißes Tastmaterial, wird die Schwelle (22) am Ort (31) überschritten. Ähnlich verhält es sich, wenn das Tastmaterial aus dem Tastabstand (C) kommend vom Lichttaster weg bewegt wird. Mit schwarzem Material wird die Schwelle (23) am Ort (32) unterschritten, mit weißem Material dagegen am Ort (33). Nach diesem Verfahren ist der Differenzbetrag der materialabhängigen Ausschaltorte (Δ A') bzw. Einschaltorte (Δ B') deutlich geringer, als nach dem Differenzverfahren.

Die maximal mögliche geometrische Gesamtdifferenz ergibt sich bei der Auswertung nach dem Differenzverfahren (Fig. 3a) zwischen dem Einschaltort von schwarzem und dem Ausschaltort von weißem Material (Δ D). Bei der Auswertung nach dem erfinderischen Quotientenverfahren ( Fig. 3b) bildet sich die maximale Differenz zwischen dem Einschaltort von schwarzem und dem Ausschaltort von schwarzem Material (Δ D'). Auch hierbei wird mit dem neuen Verfahren eine Verbesserung um den Faktor von ca. 1,4 erreicht.

## Patentansprüche

1. Lichttaster mit einem Gehäuse, in dem ein Lichtsender (5) angeordnet ist, der einen gebündelten Sendestrahl (6) aussendet und einen Teil des am Objekt (7) reflektierten Sendestrahls (6) als Empfangsstrahl (8) aufnimmt und auf zwei benachbart angeordnete photoelektrische Wandler (9, 10) abbildet, wobei der Empfangs- und Sendestrahl (6, 8) einen Winkel miteinander einschließen, so daß durch Ausnutzung der Triangulation die Beleuchtung der einzelnen photoelektrischen Wandler (9, 10) vom Tastabstand des Objektes (7) abhängig ist, und die Signale der beiden photoelektrischen Wandler (9, 10) an einen Dividierer (15) angeschlossen sind, dem ein Komparator (16) folgt,
dadurch **gekennzeichnet,**
daß zwecks Feststellung, ob sich das Objekt (7) diesseits oder jenseits eines vorbestimmten Abstandes B befindet, die optische Anordnung so ausgebildet ist, daß der Dividierer (15) bei Anordnung des Objektes in einem Abstand A größer als der vorbestimmte Abstand B einen Wert kleiner als 1, bei Anordnung im vorbestimmten Abstand B einen Wert um 1 und bei Anordnung in einem Abstand C kleiner als der vorbestimmte Abstand B größer als 1 abgibt, daß die Schaltschwelle des Komparators (16) so eingestellt ist, daß er nur dann ein Signal ausgibt, wenn das Signal am Ausgang des Dividierers (15) größer als 1 ist, und daß dieses Signal als Anwesenheitssignal für das Objekt (7) innerhalb des vorbestimmten Abstandes B verwendet wird.

2. Lichttaster nach einem der vorhergehenden Ansrüche,
dadurch **gekennzeichnet,**
daß die Schaltschwelle im Komparator mit einer Hysterese versehen ist, damit die Ausschaltschwelle unterhalb der Einschaltschwelle fixiert ist.

3. Lichttaster nach einem der vorhergehenden Ansprüche,
dadurch **gekennzeichnet,**
daß die Signale der beiden photoelektrischen Wandler vor dem Dividiervorgang zuerst in einem Strom-/Spannungswandler, einem elektronischen Filter und einer Verstärkerstufe aufgearbeitet werden.

## Claims

1. Light sensor comprising a housing in which a light transmitter (5) is arranged, which transmits a bundled transmitted beam (6) and which receives a part of the transmitted beam (6) reflected at the object (7) as a received beam (8) and images it onto two adjacently disposed, photoelectric converters (9, 10), wherein the received beam and the transmitted beam (6, 8) include an angle with one another, so that by exploitation of the triangulation the illumination of the individual photoelectric converters (9, 10) is dependent on the sensing distance of the object (7), and wherein the signals of the two photoelectric converters (9, 10) are connected to a divider (15), which is followed by a comparator (16), characterized in that for the purpose of determining whether the object (7) is located on this side or the far side of a predetermined spacing B, the optical arrangement is so designed that the divider (15) transmits a value smaller than one at a distance A greater than the predetermined distance B, a value around one on arrangement at the predetermined distance B, and a value greater than one when arranged at a distance C smaller than the predetermined distance B; in that the switching threshold of the comparator (16) is so selected that it only transmits a signal when the signal at the output of the divider (15) is greater than one; and in that this signal is used as a signal for presence of the object (7) within the predetermined distance B.

2. Light sensor in accordance with one of the preceding claims, characterized in that the switching threshold in the comparator is provided with a hysteresis so that the switching off threshold is fixed beneath the switching on threshold.

3. Light sensor in accordance with one of the preceding claims, characterized in that the signals of the two photoelectric converters are first processed prior to the division procedure in a current/voltage converter, in an electronic filter and in an amplifier stage.

## Revendications

1. Détecteur lumineux comportant un boîtier dans lequel est disposé un émetteur de lumière (5), qui émet un rayon lumineux (6) sous forme de faisceau et qui reçoit sous forme de rayon de réception (8) une partie du rayon d'émission (6) réfléchi sur l'objet (7) dont l'image se forme sur deux convertisseurs photo-électriques (9, 10) disposés au voisinage l'un de l'autre, le rayon lumineux émis et le rayon lumineux reçu (6, 8) formant entre eux un angle, si bien qu'en utilisant la triangulation, l'éclairage des convertisseurs photo-électriques (9, 10) individuels est fonction de la distance de détection de l'objet (7), et les signaux des deux convertisseurs photo-électriques (9, 10) sont envoyés dans un dispositif de division (15) suivi d'un comparateur (16),
caractérisé en ce que
en vue de constater si l'objet (7) se trouve en deçà, ou au-delà d'une distance B prédéterminée, le dispositif optique est constitué de façon telle que le dispositif de division (15) délivre, dans le cas où l'objet est placé à une distance A supérieure à la distance prédéterminée B, une valeur inférieure à 1, dans le cas où il est placé à la distance prédéterminée B, une valeur égale à environ 1 et dans le cas où il est placé à une distance C inférieure à la distance prédéterminée B, une valeur supérieure à 1, en ce que le seuil de commutation du comparateur (16) est réglé de façon telle qu'il ne délivre un signal que lorsque le signal à la sortie du dispositif de division (15) est supérieur à 1, et en ce que ce signal est utilisé en tant que signal de présence pour un objet (7) situé en deçà de la distance prédéterminée B.

2. Détecteur lumineux selon l'une des revendications précédentes,
caractérisé en ce que
le seuil de commutation du comparateur comporte une hystérésis afin que le seuil de mise hors circuit soit fixé en-dessous du seuil de mise en circuit.

3. Détecteur lumineux selon l'une des revendications précédentes,
caractérisé en ce que
les signaux des deux convertisseurs photo-électriques sont d'abord traités, avant l'opération de division, dans un convertisseur intensité/tension, dans un filtre électronique et dans un étage d'amplification.
